# EUROPEAN PATENT APPLICATION

(11) **EP 4 707 786 A1**
(43) Date of publication of application: **11.03.2026**
(21) Application number: 24813886.9
(22) Date of filing: 02.04.2024
(51) Int. Cl.: G01N 21/88, G01N 21/01

(54) **SQUARE BATTERY APPEARANCE DEFECT DETECTION METHOD AND APPARATUS, STORAGE MEDIUM, AND ELECTRONIC DEVICE**

(30) Priority: 02.06.2023 CN 202310644737
(71) Applicant: DSTek Co., Ltd, Suzhou, Jiangsu 215000 (CN)
(72) Inventor: HAN, Xu, Suzhou, Jiangsu 215000 (CN); CHEN, Yanlong, Suzhou, Jiangsu 215000 (CN)
(74) Representative: Dilg, Haeusler, Schindelmann Patentanwaltsgesellschaft mbH
(86) International application number: PCT/CN2024/085601
(87) International publication number: WO 2024/244680

(57) **Abstract**

The present invention belongs to the technical field of computers, and provides a square battery appearance defect detection method and apparatus, a storage medium, and an electronic device. The method comprises: moving a battery to be detected to a first position, and calling a first camera module to photograph a first part of said battery to form a front image and a rear image of said battery; moving said battery to a second position, and calling a second camera module to photograph a second part of said battery to form a left side image and a right side image of said battery; moving said battery to a third position, and calling a third camera module to photograph a third part of said battery to form a bottom image and a top image of said battery; and performing appearance defect identification on said battery according to the front image, the rear image, the left side image, the right side image, the bottom image and the top image. The present invention can improve the overall defect identification efficiency for square batteries.

## Description

### CROSS REFERENCE TO RELATED INVENTION

The present invention claims the priority to the Chinese patent invention with the filing No. 202310644737.6 filed with the China National Intellectual Property Administration on June 2, 2023, and entitled "SQUARE BATTERY APPEARANCE DEFECT DETECTION METHOD AND APPARATUS, STORAGE MEDIUM, AND ELECTRONIC DEVICE", which is incorporated herein by reference in entirety.

### TECHNICAL FIELD

The present invention relates to the technical field of computer, and in particular to a method, an apparatus, a storage medium, and an electronic device for detecting appearance defects in square batteries.

### BACKGROUND

With a rapid development of new energy vehicles, the production capacity of power batteries is increasing daily, and product quality requirements are becoming increasingly stringent. Battery quality detection includes appearance defect detection. There are many types of appearance defects that need to be detected, such as dents, bumps, wrinkles, battery pack damage, and scratches. These appearance defects not only affect the appearance of the product but also pose significant safety hazards.

Most of the appearance defect detections in related power batteries are conducted by manual visual inspection. The quality department trains inspection staff, develops corresponding work instructions, and conducts skills assessments for the staff. Only those who pass the assessments are allowed to work, thus completing the appearance detections of power batteries.

With the development of artificial intelligence technology, automated defect detection using machinery and equipment is gradually emerging. However, for square-shaped power batteries with plurality of surfaces, each surface requires defect detection. Related methods for defect detection using machinery and equipment are relatively inefficient.

### SUMMARY

The objective of the present invention lies in providing a method, apparatus, storage medium, and electronic device for detecting appearance defects in square batteries, thereby solving at least one of the aforementioned problems.

Some embodiments of the present invention provide a method for detecting appearance defects in square batteries, the method includes steps of: moving a battery to be detected to a first position, calling a first camera module to photograph a first part of the battery to be detected, and forming a front image and a rear image of the battery to be detected; moving the battery to be detected to a second position, calling a second camera module to photograph a second part of the battery to be detected, and forming a left side image and a right side image of the battery to be detected; moving the battery to be detected to a third position, calling a third camera module to photograph a third part of the battery to be detected, and forming a bottom image and a top image of the battery to be detected; and identifying appearance defects of the battery to be detected based on the front image, the rear image, the left side image, the right side image, the bottom image, and the top image.

In some optional embodiments, the first camera module includes a first line-scan camera module and a first 3D camera module, the front image includes a line-scan front image and a 3D front image, the rear image includes a line-scan rear image and a 3D rear image, and the step of calling a first camera module to photograph a first part of the battery to be detected, and forming a front image and a rear image of the battery to be detected can include:
moving the first line-scan camera module and the first 3D camera module along a first direction, acquiring information of the front image of the battery to be detected, and forming the line-scan front image and the 3D front image; and
rotating the battery to be detected at a first position by a preset angle, moving the first line-scan camera module and the first 3D camera module to move along a second direction, acquiring information of the rear image of the battery to be detected, and forming the line-scan rear image and the 3D rear image.

In some optional embodiments, both the first line-scan camera module and the first 3D camera module are provided with sensing devices, and a number of the sensing devices on the first line-scan camera module and the first 3D camera module is one or two, respectively.

In some optional embodiments, the second camera module includes a second camera module A and a second camera module B, and the step of moving the battery to be detected to a second position, calling a second camera module to photograph a second part of the battery to be detected, and forming a left side image and a right side image of the battery to be detected can include:
the battery to be detected passing by the second camera module during its movement to the second position; scanning the second part by the second camera module A during a passage of the battery to be detected, forming the left side image; scanning the second part by the second camera module B during the passage of the battery to be detected, and forming the right side image.

In some optional embodiments, the second camera module A includes a second line-scan camera module A and a second 3D camera module A, the second camera module B includes a second line-scan camera module B and a second 3D camera module B, and each of the second line-scan camera module A, the second 3D camera module A, the second line-scan camera module B, and the second 3D camera module B is provided with one or more sensing devices, and a number of the sensing devices on the second line-scan camera module A, the second 3D camera module A, the second line-scan camera module B, and the second 3D camera module B is one or two, respectively.

In some optional embodiments, moving the battery to be detected to a fourth position, and calling a fourth camera module to photograph a fourth part of the battery to be detected, and forming a pole image and an explosion-proof valve image of the battery to be detected; and

The step of identifying appearance defects of the battery to be detected based on the front image, the rear image, the left side image, the right side image, the bottom image, and the top image can include: identifying the appearance defects of the battery to be detected based on the front image, the rear image, the left side image, the right side image, the bottom image, the top image, the pole image, and the explosion-proof valve image.

In some optional embodiments, the step of identifying appearance defects of the battery to be detected based on the front image, the rear image, the left side image, the right side image, the bottom image, and the top image can include steps of:
synthesizing the front image and the rear image to form a first synthetic image;
synthesizing the left side image and the right side image to form a second synthetic image; and
identifying appearance defects of the battery to be detected based on the first synthetic image, the second synthetic image, the bottom image, and the top image.

In some optional embodiments, the step of synthesizing the front image and the rear image, or the step of synthesizing the left side image and the right side image, includes:
extracting the front image and the rear image to be synthesized, or the left side image and the right side image to be synthesized;
extracting shape features from the front image and the rear image, and the left side image and the right side image; and
horizontally stitching, vertically stitching, or directly fusing, based on the extracted shape features, the front image and the rear image, or the left side image and the right side image, that have similar shape features.

In some optional embodiments, the step of synthesizing the front image and the rear image, or the step of synthesizing the left side image and the right side image, includes:
determining the front image and the rear image to be synthesized, and the left side image and the right side image to be synthesized, based on shape features;
establishing a coordinate system and extracting pixel position coordinates of the front image and the rear image to be synthesized, or the left side image and the right side image to be synthesized;
calculating an average pixel value of the front image and the rear image, or the left side image and the right side image, at a same pixel position coordinate; and
using the average pixel value as a pixel value of a synthesized image.

In some optional embodiments, the line-scan front image is a time-division line-scan front image, and after the step of acquiring acquire information of the front image of the battery to be detected, and forming the line-scan front image and the 3D front image, which can include:
decomposing the line-scan front image according to the time-division line-scan image and corresponding scanning rules to form a plurality of line-scan front images.

In some optional embodiments, the step of identifying appearance defects of the battery to be detected based on the front image, the rear image, the left side image, the right side image, the bottom image, and the top image can include: acquiring images of same parts of a plurality of batteries to be detected, fusing the images of the same parts, and identifying appearance defects of the batteries to be detected based on fused images, wherein the images of the same parts include one or more of the front image, the rear image, the left side image, the right side image, the bottom image, and the top image;
in response to that an identification result of one of the fused images indicates a presence of an appearance defect, individually detecting appearance defects in unfused images corresponding to the fused image with the appearance defect, and determining, based on an appearance defect identification result of each image, a corresponding battery has the appearance defect.

In some optional embodiments, the step of acquiring images of same parts of a plurality of batteries to be detected, fusing the images of the same parts includes: identifying one or more reference points from each image to be fused; aligning the images to be fused according to the one or more reference points so that the images to be fused have a same position and orientation; fusing pixels corresponding to the reference points representing the same or corresponding positions in the images to be fused; and fusing other pixels in the images to be fused based on determined reference points.

In some optional embodiments, a number of acquired images of the same part of the plurality of batteries to be detected is determined according to a yield rate of the batteries.

Some embodiments of the present invention also provide a device for detecting appearance defects in a square battery, the device including:
a first photographing module, configured to move a battery to be detected to a first position, call a first camera module to photograph a first part of the battery to be detected, and form a front image and a rear image of the battery to be detected;
a second photographing module, configured to move the battery to be detected to a second position, call a second camera module to photograph a second part of the battery to be detected, and form a left side image and a right side image of the battery to be detected;
a third photographing module, configured to move the battery to be detected to a third position, and call a third camera module to photograph a third part of the battery to be detected, and form a bottom image and a top image of the battery to be detected; and
a defect identification module, configured to identify appearance defects of the battery to be detected based on the front image, the rear image, the left side image, the right side image, the bottom image, and the top image.

In some optional embodiments, the first camera module is connected to a first conveying device via a sliding device in a slidable way, and the third camera module is connected to a second conveying device via the sliding device in a slidable way. In some optional embodiments, the device further includes: a fourth photographing module, configured to move the battery to be detected to a fourth position, call a fourth camera module to photograph a fourth part of the battery to be detected, and form a pole image and an explosion-proof valve image of the battery to be detected.

In some optional embodiments, the first camera module includes a first line-scan camera module and a first 3D camera module, wherein the first line-scan camera module includes a first line-scan camera, a line coaxial device, and a line light device;
the second camera module includes a second camera module A and a second camera module B, wherein the second camera module A includes a second line-scan camera module A and a second 3D camera module A, the second camera module B includes a second line-scan camera module B and a second 3D camera module B, the second line-scan camera module A includes a second line-scan camera A and a line light device A, and the second line-scan camera module B includes a second line-scan camera B and a line light device B;
the third camera module includes a third line-scan camera module and a third 3D camera module, wherein the third line-scan camera module includes a third line-scan camera, a line coaxial device, and a line light device; and
the fourth camera module includes an area scan camera A and an area scan camera B, wherein below the area scan camera A, a line coaxial light device and a bar light device are arranged in sequence, and below the area scan camera B, a bar light device is arranged.

In some optional embodiments, the defect identification module is configured to perform first-type battery appearance defect identification on 3D images photographed by the first 3D camera module, the second 3D camera module A, the second 3D camera module B, and the third 3D camera module, and to perform second-type battery appearance defect identification on line-scan images photographed by the first line-scan camera module, the second line-scan camera module A, the second line-scan camera module B, and the third line-scan camera module;
wherein the first-type battery appearance defect includes one or more of dents, bulges, appearance damage, scratches, and depth of an overlap width of a battery protective layer; the second-type battery appearance defect includes one or more of bubbles in the battery protective layer, dents, bulges, wrinkles, appearance damage, scratches, overlap width of the battery protective layer, height of the battery protective layer, surface foreign matter, surface lifting, and surface fingerprints.

Some embodiments of the present invention also provide a computer-readable storage medium, wherein executable instructions are stored on the computer-readable storage medium, the executable instructions, when executed by a processor, cause the processor to perform the method described in any embodiment of the present invention.

Some embodiments of the present invention also provide an electronic device, including:
one or more processors; and
a memory, configured to store one or more programs, the one or more programs, when executed by the one or more processors, cause the one or more processors to perform the method described in any embodiment of the present invention.

The above-described method, apparatus, storage medium, and electronic device for detecting appearance defects in square batteries, by providing corresponding camera modules at different detection positions and specifically using a first camera module, a second camera module, and a third camera module to photograph the first part, the second part, and the third part of the battery to be detected respectively, effectively ensure the integrity of image acquisition across the six planes of the square battery. This allows for acquisition of images of all surfaces of the battery at once, enabling direct detection of overall battery appearance defects based on the images of each surface, thus improving the efficiency of overall battery appearance defect identification.

### BRIEF DESCRIPTION OF DRAWINGS

To more clearly illustrate the technical solutions of the embodiments of the present invention, the drawings used in the embodiments will be briefly described below. It should be understood that the following drawings only show some embodiments of the present invention and therefore should not be considered as limiting the scope of the present invention.
Figure 1 is a structural diagram of a first portion of a battery appearance detection device provided in some embodiments of the present invention;
Figure 2 is a flowchart illustrating a method for detecting appearance defects in square batteries provided in some embodiments of the present invention;
Figure 3 is a structural diagram of a second portion of a battery appearance detection device provided in some embodiments of the present invention;
Figure 4 is a structural diagram of a third portion of a battery appearance detection device provided in some embodiments of the present invention;
Figure 5 is a structural block diagram of a square battery appearance defect detection device provided in some embodiments of the present invention.

Reference signs: 101-First conveying device; 102-First 3D camera module; 103-Line coaxial device; 104-Line light device; 105-First line-scan camera; 121-Line light device A; 122-Second line-scan camera A; 123-Second line-scan camera module A and second 3D camera module A; 124-Line light device B; 125-Second line-scan camera B; 126-Second line-scan camera module B and second 3D camera module B; 141-Area scan camera A; 142-Line coaxial light device; 143-Bar light device; 144-Bar light device; 145-Area scan camera B; 502-First photographing module; 504-Second photographing module; 506-Third photographing module; 510-Fourth photographing module; 508-Defect identification module.

### DETAILED DESCRIPTION OF EMBODIMENTS

To make the objectives, technical solutions, and advantages of the present invention clearer, the present invention will be further explained in details in combination with the drawings and embodiments below. It should be understood that the specific embodiments described herein are merely illustrative and not intended to limit the present invention.

All terms used in the present invention (including technical terms and scientific terms) have the meanings commonly understood by those skilled in the art, unless otherwise defined. It should be noted that the terms used herein should be interpreted in a manner consistent with the context of this specification, and not in an idealized or overly rigid way.

For example, the terms "first", "second", etc., used in the present invention can be used herein to describe various elements, but these elements are not limited by these terms. These terms are only configured to distinguish one element from another. For instance, without departing from the scope of the present invention, a first camera module can be referred to as a second camera module, and similarly, a second camera module can be referred to as a first camera module. Both the first camera module and the second camera module are camera modules, but they are not the same camera module.

For example, the terms "comprising" and "including" used in the present invention indicate the presence of features, steps, operations, and/or components, but do not exclude the presence or addition of one or more other features, steps, operations, or components.

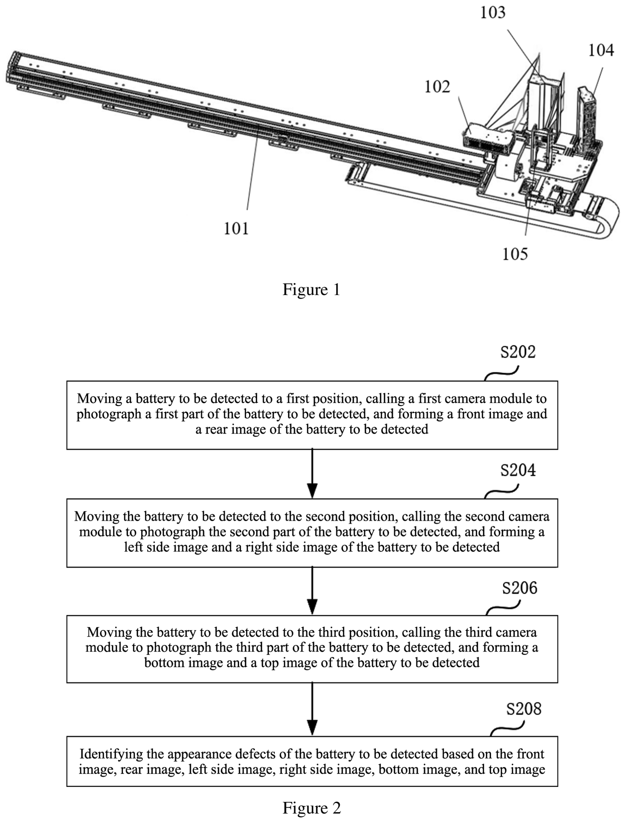

In some embodiments of the present invention, as shown in FIG. 2, a method for detecting the appearance of a square battery is provided. This method can include:
Step S202: moving the battery to be detected to a first position, calling a first camera module to photograph a first part of the battery to be detected, and forming a front image and a rear image of the battery to be detected.

In some embodiments, the battery to be detected can be a square battery with six planes, wherein the six planes can include a front surface, a rear surface, a left side surface, a right side surface, a bottom surface, and a top surface. The square battery can be covered with a protective layer such as a blue film or an aluminum shell, and the electronic device can detect appearance defects present on the blue film or aluminum shell. One side surface of the battery to be detected can include a pole and an explosion-proof valve, wherein the pole includes a positive pole and a negative pole.

The first part can include parts on the front surface and the rear surface of the battery to be detected, and the first position can be a position suitable for the first camera module on the battery appearance detection apparatus to photograph the first part.

In some embodiments, a conveyor belt or robotic arm transports the battery to be detected to a first position. A plurality of stations are provided on the battery appearance detection apparatus, wherein each station can be configured to detect a corresponding different part of the battery, respectively. For example, a first station is configured to detect the first part of the battery. The first position is located at the first station. The first station can further include a first conveying device, wherein the first conveying device can be a conveyor belt. A first camera module moves at a first constant speed in a first direction or a second direction under the conveying of the first conveying device. The first direction and the second direction can be one of a horizontal direction of movement and a vertical direction of movement, respectively. The first position can be provided at any position that the first camera module passes through during its constant speed movement. When the first camera module passes through the first position during its movement, the first camera module acquires an image of the first part of the battery to be detected, in response to that the battery to be detected has already been transported to the first position.

In some optional embodiments, the first speed can be any speed such as 0.2 m/s, 0.5 m/s, or 1 m/s. The first speed can be provided according to the required number of front images and the rear images of the battery to be detected. For example, when there are a large number of batteries to be detected, in order to improve the detection speed of the batteries to be detected, the first speed can be provided to 1 m/s, allowing the batteries to be detected to quickly pass through the first position.

In some optional embodiments, the first camera module is a module for photographing an image of the appearance of a first part of the battery, and the first camera module can include one or more camera devices. For example, it can have two different types of camera devices, namely a first line-scan camera module and a first 3D camera module. Correspondingly, the front image includes a line-scan front image and a 3D front image, and the rear image includes a line-scan rear image and a 3D rear image. By photographing the first part of the battery to be detected using different types of camera devices, corresponding different battery appearance images are formed. These different battery appearance images can then be configured together to detect battery appearance defects, improving the detection accuracy of appearance defect detection of the batteries to be detected. One or two first camera modules can be provided.

In some optional embodiments, when there are two first camera modules, namely first camera module A and first camera module B, the first camera module A and the first camera module B can be arranged opposite each other on both sides of the first position. By using two first camera modules to photograph the first part of the battery to be detected, the number of front images and the rear images of the first part of the battery to be detected is increased, improving the accuracy of subsequent appearance defect detection of the battery to be detected.

In some optional embodiments, the first camera module is connected to the first conveying device via a sliding device in a slidable way. The sliding device is provided at the bottom of the first camera module. The sliding device can be a single slide rail provided in the center of the bottom of the first camera module, or two slide rails provided on both sides of the bottom of the first camera module. To improve the stability of the first camera module mounting, the number of sliding devices can be increased.

In some optional embodiments, a sensing device is provided on the first camera module. When the first camera module passes the first position, if the sensing device detects that the battery to be detected is at the first position, it sends a detection signal to drive the first camera module to photograph the first part of the battery to be detected. Optionally, the sensing device can be a laser sensor, infrared sensor, ultrasonic sensor, photoelectric sensor, or other device capable of detecting the edge of the battery to be detected.

In some optional embodiments, the battery to be detected can remain at the first position for a first dwell time to make the image photographed by the first camera module clearer. The first dwell time can be any time, such as 3s, 5s, or 10s. The first dwell time can be set according to the number of front images and the rear images of the battery to be detected required. For example, when there are a large number of batteries to be detected, in order to improve the detection speed of the batteries to be detected, the first dwell time can be set to a shorter time, such as 1s.

Step S204: moving the battery to be detected to the second position, calling the second camera module to photograph the second part of the battery to be detected, and forming a left side image and a right side image of the battery to be detected.

In these embodiments, the second position can be set at the second station of the battery appearance detection apparatus, and the second part can include the part of the left side surface and the right side surface of the battery to be detected. The battery to be detected is moved to the second position by a robotic arm or conveyor belt. The second camera module is fixed near the second position. Driven by the robotic arm or conveyor belt, the battery to be detected moves longitudinally back and forth past the second camera module at the second position, so that the second camera module photographs the second part of the battery to be detected. The second camera module is a module that is configured to photograph the appearance of a second part of the battery, and can include one or more camera devices. For example, one or two camera devices can be provided.

In some optional embodiments, the second camera module includes two different types of camera devices, namely a second line-scan camera module and a second 3D camera module. Each camera device can photograph the second part individually, forming independent images. The left side image includes a line-scan left side image and a 3D left side image, and the right side image includes a line-scan right side image and a 3D right side image.

In some optional embodiments, two second camera modules can be provided, wherein the second camera module includes a second camera module A and a second camera module B. Second camera module A and second camera module B are respectively positioned above and below the second location, respectively detecting the left side images and the right side images of the battery to be detected.

In some optional embodiments, one second camera module can be provided. The second camera module can be positioned above or below the second location. After the left side image or right side image of the battery to be detected is acquired, a robotic arm or rotation module rotates the battery 180 degrees to acquire an image of the other side of the battery to be detected.

In these embodiments, the battery to be detected can move at a constant second speed past the second camera module. A second sensing device is provided on the second camera module. When the battery to be detected moves at the constant second speed past the second camera module, the second sensing device emits a detection signal, driving the second camera module to photograph the second part of the battery. Exemplarily, the second sensing device can be a laser sensor, infrared sensor, ultrasonic sensor, photoelectric sensor, or other device capable of detecting the edge of the battery. The second speed can be any speed such as 0.2 m/s, 0.5 m/s, or 1 m/s. The value of the second speed can be the same as or different from that of the first speed. The second speed can be set according to the required number of left side images and the right side images of the battery to be detected.

In some optional embodiments, the battery to be detected can remain at the second position for a second dwell time to make the image photographed by the second camera module clearer. The second dwell time can be any time, such as 3s, 5s, or 10s, and the second dwell time can be set according to the required number of left side images and the right side images of the battery to be detected.

Step S206: moving the battery to be detected to the third position, calling the third camera module to photograph the third part of the battery to be detected, and forming a bottom image and a top image of the battery to be detected.

In some embodiments of the present invention, the battery to be detected is transported to the third position using a conveyor belt or robotic arm of the battery appearance detection apparatus. The third position can be provided at the third workstation of the battery appearance detection apparatus, where the third part of the battery to be detected can include the parts of the bottom surface and the top surface of the battery to be detected. The third workstation can also include a second conveying device, wherein the second conveying device can be a conveyor belt. The third camera module moves at a third constant speed in the first direction or the second direction under the conveying of the second conveying device. The third position can be provided at any position that the third camera module passes through during its constant speed movement. When the third camera module passes through the third position during its movement, the third camera module acquires an image of the third part of the battery to be detected, in response to that the battery to be detected has already been transported to the third position. Specifically, the third speed can be any speed such as 0.2 m/s, 0.5 m/s, or 1 m/s. The value of the third speed can be the same as or different from those of the first speed and the second speed. The third speed can be provided according to the required number of bottom images and top images of the battery to be detected. For example, when there are a large number of batteries to be detected, in order to improve the detection speed of the batteries to be detected, the third speed can be provided to 1 m/s, allowing the batteries to be detected to quickly pass through the third position.

In some optional embodiments, the third camera module can be a module for photographing an image of the appearance of the third part of the battery to be detected, and the third camera module can include one or more camera devices. For example, the third camera module can have two different types of camera devices, namely a third line-scan camera module and a third 3D camera module. The bottom image includes a line-scan bottom image and a 3D bottom image, while the top image includes a line-scan top image and a 3D top image. By using different types of camera devices to photograph the third part of the battery to be detected, the detection accuracy of the battery to be detected is improved. One or two third camera modules can be provided.

In some optional embodiments, when there are two third camera modules, such as third camera module A and third camera module B. The third camera module A and the third camera module B can be arranged opposite each other on both sides of the third position. By using two third camera modules to photograph the third part of the battery to be detected, the number of bottom and top images of the third part of the battery to be detected is increased, improving the accuracy of subsequent appearance defect detection of the battery to be detected.

In some optional embodiments, the third camera module can be connected to the second conveying device via a sliding device in a slidable way, wherein the sliding device is provided at the bottom of the third camera module. This sliding device can be a single slide rail provided in the center of the bottom of the third camera module, or two slide rails provided on both sides of the bottom of the third camera module. To improve the stability of the third camera module mounting, the number of sliding devices can be increased.

In some optional embodiments, a sensing device can be provided on the third camera module. When the third camera module passes the third position, if the sensing device detects that the battery to be detected is at the third position, it sends a detection signal to drive the third camera module to photograph the third part of the battery to be detected. Specifically, the sensing device can be a laser sensor, infrared sensor, ultrasonic sensor, photoelectric sensor, or other device capable of detecting the edge of the battery to be detected.

In some optional embodiments, the battery to be detected can remain at the third position for a third dwell time to make the image photographed by the third camera module clearer. The third dwell time can be any time, such as 3s, 5s, or 10s, and the third dwell time can be set according to the required number of bottom images and top images of the battery to be detected.

In some optional embodiments, the first dwell time remained by the battery to be detected at the first position, the second dwell time remained at the second position, and the third dwell time remained at the third position can be the same and can occur at the same time. For example, when plurality of batteries to be detected are present on the battery appearance detection apparatus and are moved synchronously for detection, at a certain moment, battery to be detected A moves to the first position, battery to be detected B moves to the second position, and battery to be detected C moves to the third position. At this time, the first dwell time remained by battery to be detected A at the first position, the second dwell time remained by battery to be detected B at the second position, and the third dwell time remained by battery to be detected C at the third position are the same because the movement of the batteries to be detected is synchronous. Providing the dwelling and moving of the batteries to be detected at the three positions to be synchronous can improve the efficiency of overall battery appearance defect identification.

Step S208: identifying the appearance defects of the battery to be detected based on the front image, rear image, left side image, right side image, bottom image, and top image.

In some embodiments of the present invention, a corresponding battery appearance defect identification model is pre-set, through which the battery appearance defects can be identified. Battery appearance defects can include one or more of the following types: dents, bumps, surface damage, scratches, overlap width of the battery protective layer, height of the protective layer, surface foreign matter, wrinkles, lifting, fingerprints, dirt, etc. Optionally, the battery appearance defect identification model can be a convolutional neural network model. The system can construct a convolutional neural network model corresponding to each or several defect types, using each image as input to the corresponding model, and using different convolutional neural network models to perform corresponding defect identification. This detects whether the corresponding defect exists.

In some embodiments of the present invention, the identification of appearance defects in a battery to be detected based on a convolutional neural network model includes:
acquiring an image to be detected of the battery to be detected, wherein the image to be detected includes a front image, a rear image, a left side image, a right side image, a bottom image, and a top image; inputting the image to be detected of the battery to be detected into a battery appearance defect identification model for feature extraction, extracting low-order features such as edges, line segments, and contours of the image to be detected based on a convolutional module, and integrating the low-order features based on a down sampling convolutional module; and performing secondary integration of the integrated low-order features based on a fully connected neural network to identify the appearance defects of the battery, and outputting the identification result.

In some optional embodiments, establishing a battery appearance defect identification model can include: acquiring battery defect images with labeled appearance defects; performing noise reduction processing on the battery defect images to eliminate interference; performing image data enhancement processing on the battery defect images; based on the enhanced battery defect images, dividing the battery defect images into a training set and a test set, extracting defect features from the training set using a convolutional neural network model, and identifying the defect features. The network parameters of the convolutional neural network model are adjusted, and the identification accuracy of battery appearance defects is calculated using a test set. When the identification accuracy falls below a threshold, the network parameters of the convolutional neural network model are adjusted again, and the convolutional neural network model is trained again using a training set. The identification accuracy of battery appearance defects is calculated again using a test set until the identification accuracy reaches the threshold.

In some optional embodiments, image data enhancement processing includes quantity equalization, color enhancement, and orientation enhancement. Quantity equalization involves expanding the battery defect image to six planes of the battery with different battery appearance defect types. Color enhancement involves randomly varying the brightness, contrast, and saturation of the battery defect image, or adding Gaussian noise to the battery defect image. Orientation enhancement involves horizontally, vertically, or randomly flipping the battery defect image. Through image data enhancement, the image data of the battery defect image is expanded, improving the identification accuracy of the convolutional neural network model.

In the method for detecting appearance defects in square batteries provided by some embodiments of the present invention, the first part, the second part, and the third part of the battery to be detected are photographed by a first camera module, a second camera module, and a third camera module, respectively, which effectively ensures the integrity of image acquisition across all six planes of the square battery, allowing images of all surfaces of the battery to be obtained at once, and improving the efficiency of overall appearance defect identification of the battery.

In some optional embodiments, the first camera module can include a first line-scan camera module and a first 3D camera module. The front image includes a line-scan front image and a 3D front image, and the rear image includes a line-scan rear image and a 3D rear image. Step S202 includes: moving the first line-scan camera module and the first 3D camera module along a first direction to acquire information of the front image of the battery to be detected, forming the line-scan front image and the 3D front image; and rotating the battery to be detected at a first position by a preset angle, causing the first line-scan camera module and the first 3D camera module to move along a second direction to acquire an information of the rear image of the battery to be detected, forming the line-scan rear image and the 3D rear image.

In some embodiments, the first line-scan camera module can be a line-scan camera, wherein the line-scan camera uses time-division line-scanning to acquire front images and the rear images of the battery to be detected. The first 3D camera module can be a 3D camera. The first direction and the second direction can be left-right movement directions, and the preset angle can be a suitable angle determined according to the device structure, such as 90 degrees or 180 degrees. In this embodiment, rotating the battery to be detected at the first position by the preset angle can be achieved by a robotic arm gripping the battery to be detected and rotating it 180 degrees around the center position of the battery to be detected as an axis, or by a rotating module provided at the bottom of the battery to be detected, wherein the rotating module is provided on a conveyor belt that moves the battery to be detected, and the rotating module rotates 180 degrees, causing the battery to be detected to rotate.

In some embodiments, the first line-scan camera module and the first 3D camera module of the first camera module can be respectively provided at different positions on the first conveying device. The first line-scan camera module and the first 3D camera module sequentially photograph the first part of the battery to be detected according to the time sequence of passing the battery to be detected. The first direction can be a direction either from left to right or from right to left, and the second direction is the movement direction opposite to the first direction.

In some embodiments, sensing devices can be provided on both the first line-scan camera module and the first 3D camera module, and the number of sensing devices on the first line-scan camera module and the first 3D camera module can be one or two, respectively.

In some optional embodiments, each of the first line-scan camera module and the first 3D camera module has one sensing device, wherein the sensing device can be provided at one side edge position of the first line-scan camera module and the first 3D camera module. When the first line-scan camera module or the first 3D camera module passes through the first position, the sensing device detects the edge of the battery to be detected and emits a detection signal. The detection signal of the sensing device serves as the start signal for starting photographing. After receiving the detection signal, the first line-scan camera module and the first 3D camera module start continuous photographing until all the batteries to be detected at the first position have been photographed. Specifically, when the sensing devices on the first line-scan camera module and the first 3D camera module do not detect the edge of the battery to be detected within a preset time, it indicates that all the batteries to be detected at the first position have been photographed, and the first line-scan camera module and the first 3D camera module stop photographing. The preset time can be any time such as 2s, 3s, or 10s.

In some optional embodiments, the first line-scan camera module and the first 3D camera module can each have two sensing devices. A sensing device is provided on each of the two side edges of the first line-scan camera module and the first 3D camera module to sense the two side edges of the battery to be detected, respectively. For example, when the first line-scan camera module passes the first position, the left side of the first line-scan camera module passes the edge of the battery to be detected first. The left side sensing device of the first line-scan camera module senses the edge of the battery to be detected and sends a detection signal, driving the first line-scan camera module to start photographing the first part of the battery to be detected. The right side of the first line-scan camera module then passes the edge of the battery to be detected. When the right side sensing device of the first line-scan camera module senses the edge of the battery to be detected for the first time, the battery to be detected has not completely passed through the first line-scan camera module. When the right side sensing device of the first line-scan camera module senses the edge of the battery to be detected for the second time, it sends a stop signal, and the first line-scan camera module has passed through the battery to be detected and begins photographing the next battery to be detected.

In some embodiments, the photographing frequency of the first line-scan camera module and the first 3D camera module can be set according to the system memory and the image processing speed of the server. For example, the photographing frequency of the first line-scan camera module can be 10 images photographed per second, and the photographing frequency of the first 3D camera module can be 15 images photographed per second.

For example, referring to Figure 1, the battery appearance detection apparatus at the first station includes a first conveying device 101, a first 3D camera module 102, and a first line-scan camera module located on one side of the first conveying device 101. The first line-scan camera module includes a first line-scan camera 105, a line coaxial device 103, and a line beam device 104. When the battery to be detected is in the first position, the first conveying device 101 drives the first 3D camera module 102 and the first line-scan camera module to move from right to left. The first 3D camera module 102 and the first line-scan camera module sequentially scan and extract images of the front of the battery to be detected in the first position, obtaining a line-scan front image and a 3D front image, respectively.

Subsequently, the battery to be detected can be rotated by 180° at the first position. The first conveying device 101 drives the first 3D camera module 102 and the first line-scan camera module to move from left to right. The first 3D camera module 102 and the first line-scan camera module sequentially scan and extract images of the rear of the battery to be detected at the first position, obtaining a line-scan rear image and a 3D rear image, respectively.

In some optional embodiments, the third camera module has the same configuration as the first camera module, which will not be described again here.

In some optional embodiments, the second camera module includes a second camera module A and a second camera module B. Step S204 includes: passing the battery to be detected through the second camera module during its movement to the second position; scanning the second part by the second camera module A during a passage of the battery to be detected, forming the left side image; and scanning the second part by the second camera module B during the passage of the battery to be detected, forming the right side image.

In some embodiments, the second position is provided at the rearmost position of the second workstation. For example, the second camera module A is positioned in front of the second camera module B, and the second position is positioned behind the second camera module B. During the longitudinal movement of the battery to be detected, it first passes the second camera module A, then the second camera module B, and finally reaches the second position. The battery to be detected is positioned with its left side facing up and its right side facing down, or its right side facing up and its left side facing down. The second camera module A has its lens positioned either upwards or downwards, and the lens direction of the second camera module B is opposite to that of the second camera module A.

In some optional embodiments, the second camera module A includes a second line-scan camera module A and a second 3D camera module A, and the second camera module B includes a second line-scan camera module B and a second 3D camera module B. Similar to the first line-scan camera module and the first 3D camera module, sensing devices are all provided on the second line-scan camera module A, the second 3D camera module A, the second line-scan camera module B, and the second 3D camera module B. The number of sensing devices on it can be one or two, and the arrangement of the sensing devices is consistent with the arrangement of the sensing devices on the first line-scan camera module and the first 3D camera module.

In some embodiments, the second line-scan camera module A and the second 3D camera module A of the second camera module A, and the second line-scan camera module B and the second 3D camera module B of the second camera module B, also have a photographing frequency that can be set according to the system memory and the image processing rate of the server.

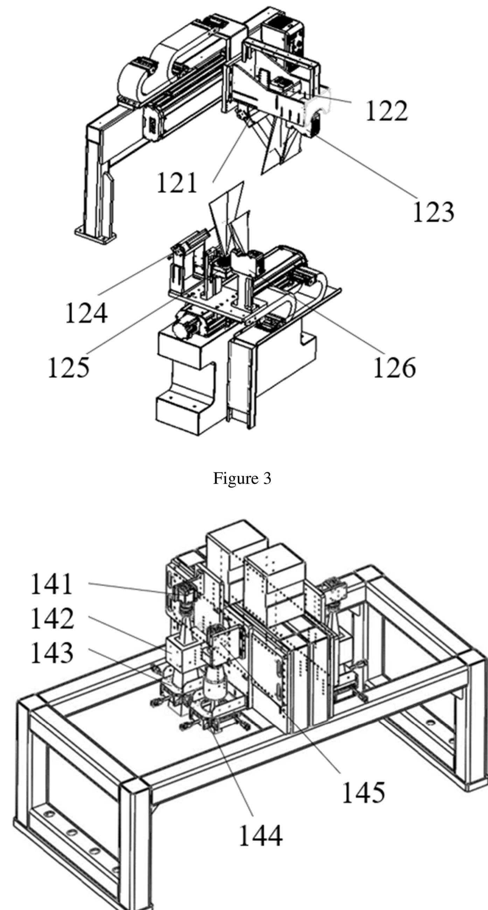

For example, referring to Figure 3, the battery appearance detection apparatus is provided with a second camera module A and a second camera module B at the upper end and the lower end of the second station. The second camera module A includes a second line-scan camera module A and a second 3D camera module A (123), and the second camera module B includes a second line-scan camera module B and a second 3D camera module B (126). The second line-scan camera module A includes a second line-scan camera A (122) and a line-light device A (121). The second line-scan camera module B includes a second line-scan camera B (125) and a line-light device B (124).

When the battery to be detected is in the second position, the battery to be detected moves longitudinally back and forth. The second line-scan camera module A and the second 3D camera module A scan and extract images of one side of the left side or the right side of the battery to be detected. Correspondingly, the second line-scan camera module B and the second 3D camera module B scan and extract images of the other side of the left side or the right side of the battery to be detected, respectively obtaining a line-scan left side image, a line-scan right side image, a 3D left side image, and a 3D right side image.

In some optional embodiments, before step S208, moving the battery to be detected to a fourth position and calling the fourth camera module to photograph the fourth part of the battery to be detected, and forming the pole images and the explosion-proof valve images of the battery to be detected are further included.

In some embodiments, the battery to be detected further has poles and an explosion-proof valve, and the system further detects the poles and the explosion-proof valve. Specifically, the battery appearance detection apparatus is also provided with a fourth camera module for photographing the pole images and the explosion-proof valve images. The battery to be detected is moved to the fourth position using a conveyor belt or a robotic arm. The fourth camera module includes an area scan camera A and an area scan camera B. The fourth position includes fourth position A and fourth position B. The fourth part of the battery to be detected includes the poles and the explosion-proof valve of the battery to be detected. The poles include a positive pole and a negative pole, wherein the positive pole and the negative pole are symmetrically distributed on both sides of the left side or the right side of the battery to be detected. The side where the poles and the explosion-proof valve of the battery to be detected are located faces the camera of the fourth camera module.

In some optional embodiments, fourth position A is located directly below the lens of area scan camera A, and fourth position B is located directly below the lens of area scan camera B.

In some optional embodiments, fourth position A is located anywhere within the photographing range of area scan camera A, and can not be directly below the lens of area scan camera A. Fourth position B is located anywhere within the photographing range of area scan camera B, and can not be directly below the lens of area scan camera B. The photographing ranges of area scan camera A and area scan camera B are set according to camera parameters.

Specifically, sensing devices are provided on the area array camera A and the area array camera B. When a battery to be detected is sensed, area array camera A photographs a pole image, and area array camera B photographs an explosion-proof valve image, or area array camera B photographs a pole image, and area array camera A photographs an explosion-proof valve image. The photographing frequency A of area array camera A and the photographing frequency B of area array camera B can be set according to the image processing speed of the server, system memory, and the required number of the pole images and the explosion-proof valve images.

In some optional embodiments, after area array camera A or area array camera B has photographed an image of one of the positive pole and the negative pole, the battery to be detected is rotated 180 degrees around the centerline of the battery as an axis by a rotating module or robotic arm provided at the bottom of the battery to be detected to acquire an image of the other of the positive pole and the negative pole.

In some optional embodiments, the battery to be detected is remained at the fourth position A and the fourth position B for a fourth dwell time A and a fourth dwell time B, respectively. The fourth dwell time A and the fourth dwell time B can be the same or different times. The fourth dwell time A and the fourth dwell time B are related to the image processing rate of the server, system memory, and the required number of the pole images and the explosion-proof valve images.

For example, referring to Figure 4, the fourth station of the battery appearance detection apparatus includes a fourth camera module, wherein the fourth camera module includes an area scan camera A (141) and an area scan camera B (145). Below the area scan camera A (141), a line coaxial light device (142) and a bar light device (143) are arranged in sequence, and below the area scan camera B (145), a bar light device (144) is arranged. The battery to be detected is remined at the fourth position for the fourth dwell time respectively. Area array camera A (141) and area array camera B (145) respectively extract images of the poles and the explosion-proof valve of the battery to be detected, obtaining the pole images and the explosion-proof valve images of the battery to be detected, where the pole images include the positive pole images and the negative pole images.

In some optional embodiments, step S208 includes: identifying the appearance defects of the battery to be detected based on the front image, rear image, left side image, right side image, bottom image, top image, pole image, and explosion-proof valve image.

In some embodiments, a battery appearance defect identification model is established based on a convolutional neural network. The acquired front image, rear image, left side image, right side image, bottom image, top image, pole image, and explosion-proof valve image are input into the battery appearance defect identification model for feature extraction and identification, and the identification result is output.

In some optional embodiments, different types of defect detection are performed on images photographed by different types of camera modules. For example, first-type battery appearance defect identification is performed on 3D images photographed by the aforementioned individual 3D camera modules, and second-type battery appearance defect identification is performed on line-scan images photographed by the various line-scan camera modules. The first-type battery appearance defect includes one or more of dents, bumps, surface damage, scratches, and the depth of the overlap width of the battery protective layer. The second-type battery appearance defect includes one or more of bubbles in the battery protective layer, dents, bumps, wrinkles, surface damage, scratches, the overlap width of the battery protective layer, the height of the battery protective layer, surface foreign matter, surface lifting, and surface fingerprints. The protective layer can be a blue film.

Using different types of images to identify different types of defects can improve the comprehensiveness of defect identification for batteries.

For example, taking the protective layer of the battery as a blue film, for the 3D front images and 3D rear images photographed by the first 3D camera module, the first-type battery appearance defects identified on them include the following defects: blue film dents and bumps, blue film damage, blue film scratches, and depth measurement of the blue film overlap width, etc. For the line-scan front images and line-scan rear images photographed by the first line-scan camera module, the first-type battery appearance defects identified on them include the following defects: blue film bubbles, blue film dents and bumps, blue film wrinkles, blue film damage, blue film scratches, blue film overlap width, blue film height, foreign matter on the pack surface, pack lifting, blue film fingerprints, etc. For the 3D left side images and 3D right side images photographed by the second 3D camera module A and the second 3D camera module B respectively, the first-type battery appearance defects identified on them include the following defects: blue film dents and bumps, blue film damage, blue film scratches, U-shaped folds, pole scratches, pole dents, pole parallelism, pole flatness, and explosion-proof valve damage, etc. For the line-scan left side images and line-scan right side images photographed by the second line-scan camera module A and the second line-scan camera module B respectively, the first-type battery appearance defects identified on them include the following defects: membrane bubbles, blue film dents and bumps, blue film wrinkles, blue film damage, blue film scratches, foreign matter on the pack surface, pack lifting, blue film fingerprints, and U-shaped folds, etc. For the pole images photographed by area scan camera A, the third-type battery appearance defects identified on them include the following defects: pole scratches, pole dirt, and pole welding slag, etc. For the explosion-proof valve images photographed by area scan camera B, the fourth-type battery appearance defects identified on them include the following defect detections: explosion-proof valve damage, explosion-proof valve dirt, and explosion-proof valve leakage, etc.

It is understandable that different types of images can identify the same type of defects. When one of the images identifies a corresponding defect, it can be directly determined that the corresponding defect exists in the corresponding part of the battery.

In some optional embodiments, when different types of images representing the same part show different identification results for the same defect, they can be marked as results of suspected corresponding defects and subject to manual assistance in subsequent judgment. When this situation occurs, it is possible to identify the specific type of image that is erroneous, and then train and optimize the identification model corresponding to that type of image to improve the accuracy of the model identification thereof.

For example, when both a 3D front image and a line-scan front image are presented for defect identification, respectively, the identification results indicate that there are no blue film dent and bump defects in the 3D front image, but that there are blue film dent and bump defects in the line-scan front image, at this point, a contradiction arose between the two. This can be marked as a suspected presented blue film dent and bump defect on the front of the battery, requiring manual assistance judgment. If the manual judgment confirms the presence of a blue film dent and bump defect, it indicates an error in the judgment of the blue film dent and bump defect in the 3D front image. The model can then be retrained and optimized to improve the accuracy of judging this defect.

In some optional embodiments, images with the same or symmetrical parts and of the same type can be synthesized to form a synthetic image, and appearance defect identification is performed based on synthetic images. For example, if the front part and rear part of a square battery are identical, as are the left side part and right side part, then the front images and the rear images can be synthesized, and the left side images and the right side images can be synthesized.

Before step S208, an image synthesizing step is included, including: synthesizing the front image and the rear image to form a first synthetic image; synthesizing the left side image and the right side image to form a second synthetic image; and identifying appearance defects of the battery to be detected based on the first synthetic image, the second synthetic image, the bottom image, and the top image.

In some embodiments, the front images and the rear images, and the left side images and the right side images, are images of the same battery to be detected.

In some embodiments, synthesizing the front images and the rear images, or the left side images and the right side images includes: extracting the front image and the rear image to be synthesized, or the left side image and the right side image to be synthesized; extracting shape features from the front image and the rear image, and the left side image and the right side image; and, based on the extracted shape features, horizontally stitching, vertically stitching, or directly fusing the front image and the rear image, or the left side image and the right side image, that have similar shape features. The shape features include length and width, aspect ratio features, contour features, and area features.

In some optional embodiments, synthesizing the front images and the rear images, or the left side images and the right side images, includes: determining the front image and the rear image to be synthesized, and the left side image and the right side image to be synthesized, based on shape features; establishing a coordinate system and extracting pixel position coordinates of the front image and the rear image to be synthesized, or the left side image and the right side image to be synthesized; calculating an average pixel value of the front image and the rear image, or the left side image and the right side image, at a same pixel position coordinate; and using the average pixel value as a pixel value of the synthesized image.

In some embodiments, the coordinate system includes a two-dimensional coordinate system and a spatial coordinate system. In the two-dimensional coordinate system, the pixel position coordinates of the line-scan image photographed by the line-scan camera module are extracted; in the spatial coordinate system, the pixel position coordinates of the 3D image photographed by the 3D camera module are extracted.

In some optional embodiments, one or more reference points can be identified from each image to be fused. Pixels corresponding to the same or corresponding positions of the reference points in the images to be fused are fused. Based on the determined reference points, other pixels in the images to be fused are fused. For example, the images to be fused include a 3D front image and a 3D rear image. By identifying the 3D front image, four reference points are determined to represent the positions of the four vertices at the front of the battery, respectively. Similarly, four reference points representing the four vertices at the rear of the battery respectively can be identified from the 3D rear image. Then, the pairwise matching reference points from these four pairs are fused, and the remaining pixels in the two images are fused based on this.

Specifically, by independently photographing the six surfaces of the square battery, and for each surface, it is photographed from a fixed position (i.e., first position, second position, third position), the images of the same surfaces of the batteries are obtained with consistency. Based on this, the four vertices of each surface are used as reference points to ensure that the orientation and position are the same, and image alignment is performed. This allows for the fusion of plurality of images without requiring significant computational resources, and battery surface defect detection can be performed based on the fused image. In some optional embodiments, for the plurality of images to be fused, the plurality of images can first be aligned, and then pixels at corresponding positions in the plurality of images can be merged according to corresponding weights to form a fused image. Optionally, after merging, edge processing and post-processing can be performed on the merged image to finally form the fused image.

Herein, the image alignment can be performed according to the above-described method of determining reference points to ensure that they have the same position and orientation. Regarding weighting, each image can have the same normalized weight, or the normalized weight of the pixel setting of pixel points suspected of having defects is increased based on information such as grayscale, brightness, and color of the pixels in the image, so that the accuracy of identifying corresponding defects can be improved when subsequently identifying defects in the fused image.

In some optional embodiments, the fused image can be a grayscale image. The weight setting can be determined by combining the grayscale values of each type of defect in the image. This avoids defect identification failure after fusing pixels at the same corresponding position. For example, if there is an bubble defect at a position in a previous image, and a damage defect at the corresponding position in a later image, after merging the two, values expressed by the resulting fused pixel are normal values. Therefore, the probability of this situation happening can be reduced by setting different weights.

In the above method, by fusing plurality of images representing the same or symmetrical parts of the battery into a single image, subsequent defect detection can be completed with just one image identification, reducing the amount of data to be analyzed and thus improving the efficiency of battery defect detection.

In some optional embodiments, when a defect is identified in the fused image, individual defect identification can be performed on the fused image to identify which surface of the battery has the defect. When no defect is detected in the fused image, it can be directly determined that the part of the battery represented by the fused image is defect-free.

In some optional embodiments, the image synthesis step further includes: acquiring plurality of images of the same or corresponding parts of the battery to be detected; fusing the images of the same or corresponding parts; and identifying appearance defects of the battery to be detected based on the fused image.

Specifically, the plurality of images of the same part of the battery to be detected can be any number of, such as more than two, images of the same part of different batteries to be detected. Based on the shape features of the images, identifying and acquiring images of the same or corresponding parts of the plurality of batteries to be detected. Fusing images of the same or corresponding parts includes horizontal stitching or vertical stitching based on shape features, or image fusion based on the average pixel value of the same pixel position coordinates in a coordinate system. The coordinate system includes a two-dimensional coordinate system and a spatial coordinate system. In the two-dimensional coordinate system, the pixel position coordinates of the line-scan image photographed by the line-scan camera module are extracted; in the spatial coordinate system, the pixel position coordinates of the 3D image photographed by the 3D camera module are extracted.

Herein, "corresponding parts" refers to two or more parts that are identical or symmetrical in shape. Symmetry means that the parts on both opposite sides of a figure or object have a one-to-one correspondence in size, shape, and arrangement. For example, the front and rear of a square battery are corresponding parts, and the left side and the right side are corresponding parts. The top surface is provided with poles and explosion-proof valves, while the bottom surface does not contain poles or explosion-proof valves, so they are not corresponding parts.

In some optional embodiments, a step of further detecting appearance defects in the fused images is further included. This includes, when the identification result of one of the fused images indicates the presence of an appearance defect, the unfused image corresponding to the fused image containing appearance defects is then subjected to separate appearance defect detection. Based on the appearance defect identification results of each image, it is determined whether the corresponding battery has appearance defects.

In this embodiment, the fused images are images fused based on the average pixel value. When the fused image has an appearance defect, the pixel position coordinates of the image region where the appearance defect is located are obtained, and the pixel sum is calculated based on the average pixel value to determine the unfused images that can have appearance defects. Defect identification is performed separately on unfused images that may have appearance defects to determine the specific battery with the appearance defect.

In some optional embodiments, the fused image is a horizontal or vertical stitching of images based on shape features. The corresponding unfused image is determined based on the image region where the appearance defect is located, thus determining the specific battery with the appearance defect.

Specifically, the specific battery with the appearance defect is determined based on the photographing time of the battery to be detected.

In some optional embodiments, the number of selected images can be determined based on the battery yield rate. That is, the number of batteries to be fused is determined based on the yield rate, and then the same or corresponding parts of the corresponding number of batteries are selected for fusion. The system can determine an appropriate number based on this, avoiding excessively high frequencies requiring re-jumping to determine which image contains the defect, which in turn resulted in the number of images that needed to be detected not decreasing much, and even resulted in an increase in the number of images that need to be detected.

For example, if the yield rate is 90%, it means there is typically a 10% probability of a defect. Therefore, the number of batteries represented in the images that need to be fused can be set to less than 10. For example, images of the same or corresponding parts of 4 batteries can be fused.

Generally, since the yield rate of battery defects rarely exceeds 50%, by determining the number of images to be fused based on the yield rate, the total number of images requiring defect detection can be reduced compared to number of images performing defect detection individually. This can improve the overall defect detection efficiency for large batches of square batteries while consuming fewer image fusion resources.

In some optional embodiments, similarly, for images of the same or corresponding parts of plurality of batteries to be detected, the plurality of images can first be aligned, and then pixels at corresponding positions in the plurality of images can be merged according to corresponding weights to form a fused image.

In some optional embodiments, step S202 further includes decomposing the line-scan front image according to the time-division line-scan image and corresponding scanning rules to form a plurality of line-scan front images.

In this embodiment, the time-division line-scan front image is a synthetic image of the light sources output by the time-division line scanning. Specifically, the time-division line scanning involves a first line-scan camera module using two different light sources: line light and line coaxial light. When acquiring the front images and the rear images of the battery to be detected, the first line-scan camera module switches the type of light source according to a scanning rule, so that the line light and line coaxial light are arranged in an orderly manner in the image, outputting a synthetic image of the light sources under the two different light sources.

In some optional embodiments, the scanning rule can be to switch the light sources between line light and line coaxial light sequentially according to a set scanning frequency within a scanning cycle. For example, if a scanning cycle is 1 second, within 1 second, when the first line-scan camera module scans each line of the image, the line light and the line coaxial light scan staggeringly.

In some optional embodiments, the scanning rule can be to switch the light sources between line light and line coaxial light sequentially according to a set timing sequence within a scanning cycle. For example, if a scanning cycle is 3 seconds, a preset timing sequence of 1 second for line light scanning and 2 seconds for coaxial light scanning is used, and scanning is performed according to this timing sequence.

By utilizing time-division line-scan images for image scanning and acquisition, image acquisition efficiency can be improved and the number of camera modules is reduced.

In the method for detecting appearance defects in square batteries provided by some embodiments of the present invention, the subject of the photograph is a square battery with six surfaces. A corresponding dwell time will be remained when photographing front images, rear images, bottom images, and top images, and the images of the corresponding surfaces will be photographed at fixed first position, second position, and third position, thus ensuring that each of the six surfaces of the square battery has an independent image. Furthermore, the images photographed from the same surface of each battery exhibit consistency. Based on this, combined with image fusion technology, the four vertices of each surface are used as reference points to align the images. Pixels in the same position in the images to be fused are fused, so that the defect detection of the plurality of batteries can be completed at once. By sacrificing the size of the detection device, the image fusion is made simpler and more convenient, and excessive complexity that would consume significant computational resources during implementation of the image fusion is avoided, so that the efficiency of the defect detection of square batteries can be ultimately improved.

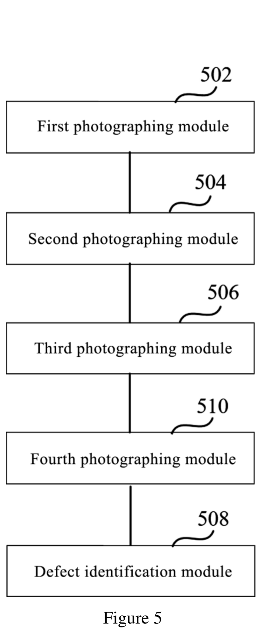

In some embodiments of the present invention, as shown in FIG. 5, a square battery appearance defect detection device is provided. The device can include:
a first photographing module 502, configured to move the battery to be detected to a first position and call a first camera module to photograph a first part of the battery to be detected, forming a front image and a rear image of the battery to be detected;
a second photographing module 504, configured to move the battery to be detected to a second position, and call a second camera module to photograph a second part of the battery to be detected, forming a left side image and a right side image of the battery to be detected;
a third photographing module 506, configured to move the battery to be detected to a third position, and call a third camera module to photograph a third part of the battery to be detected, forming a bottom image and a top image of the battery to be detected; and
a defect identification module 508, configured to identify appearance defects of the battery to be detected based on the front image, the rear image, the left side image, the right side image, the bottom image, and the top image.

In some optional embodiments, the first camera module includes a first line-scan camera module and a first 3D camera module. The front image includes a line-scan front image and a 3D front image, and the rear image includes a line-scan rear image and a 3D rear image. The first photographing module 502 is further configured to move the first line-scan camera module and the first 3D camera module along a first direction to acquire front image information of the battery to be detected, forming a line-scan front image and a 3D front image; and to rotate the battery to be detected at a first position by a preset angle, causing the first line-scan camera module and the first 3D camera module to move along a second direction to acquire rear image information of the battery to be detected, forming a line-scan rear image and a 3D rear image.

In some optional embodiments, the second camera module includes a second camera module A and a second camera module B. The second photographing module 504 is further configured to pass the second camera module as the battery to be detected moves to a second position. The second camera module A scans the second part during the passage of the battery to be detected, forming a left side image, and the second camera module B scans the second part during the passage of the battery to be detected, forming a right side image.

In some optional embodiments, the square battery appearance defect detection device further includes a fourth photographing module 510. The fourth photographing module 510 is configured to move the battery to be detected to a fourth position, and call the fourth camera module to photograph a fourth part of the battery to be detected, forming a pole image and an explosion-proof valve image of the battery to be detected.

The defect identification module 508 is also configured to identify appearance defects of the battery to be detected based on the front image, rear image, left side image, right side image, bottom image, top image, pole image, and explosion-proof valve image.

In some optional embodiments, the defect identification module 508 is further configured to synthesize the front images and the rear images to form a first synthetic image; synthesize the left side images and the right side images to form a second synthetic image; and identify appearance defects of the battery to be detected based on the first synthetic image, the second synthetic image, the bottom image, and the top image.

In some optional embodiments, the defect identification module 508 is further configured to decompose the line-scan front images according to the time-division line-scan image and corresponding scanning rules, forming plurality of line-scan front images.

In some optional embodiments, the defect identification module 508 is further configured to acquire images of the same parts of the plurality of batteries to be detected, fuse the images of the same parts, and identify appearance defects of the batteries to be detected based on fused images. The images of the same parts include one or more of the front image, the rear image, the left side image, the right side image, the bottom image, and the top image. When an identification result of one of the fused images indicates a presence of an appearance defect, the unfused images corresponding to the fused image with the appearance defect are individually subjected to appearance defect detection, and based on an appearance defect identification result of each image, it is determined whether the corresponding battery has the appearance defect.

In some embodiments of the present invention, a computer-readable storage medium is also provided, on which executable instructions are stored. When executed by a processor, the instructions cause the processor to perform the steps in the above-described method embodiments.

In some embodiments of the present invention, an electronic device is also provided, including one or more processors; a memory storing one or more programs, wherein the one or more programs, when executed by the one or more processors, cause the one or more processors to perform the steps in the above-described method embodiments.

Finally, it should be noted that the above embodiments are only used to illustrate the technical solutions of the present invention, and not to limit them. Although the present invention has been described in detail with reference to the foregoing embodiments, those ordinarily skilled in the art should understand that modifications can still be made to the technical solutions described in the foregoing embodiments, or equivalent substitutions can be made to some or all of the technical features; and these modifications or substitutions do not cause the essence of the corresponding technical solutions to depart from the scope of the technical solutions of the embodiments of the present invention.

Furthermore, those skilled in the art will understand that although some embodiments herein include certain features included in other embodiments but not other features, combinations of features from different embodiments are meant to be within the scope of the present invention and form different embodiments. For example, in the above claims, any one of the claimed embodiments can be used in any combination. The information disclosed in this background is only intended to deepen the understanding of the overall background technology of the present invention, and should not be construed as an admission or in any way implying that such information constitutes related technology known to those skilled in the art.

### INDUSTRIAL APPLICABILITY

The present invention provides a square battery appearance defect detection method and apparatus, a storage medium, and an electronic device. By providing corresponding camera modules at different detection positions to photograph corresponding parts of the square battery, and specifically using a first camera module, a second camera module, and a third camera module to photograph the first part, the second part, and the third part of the battery to be detected respectively, the integrity of image acquisition across the six planes of the square battery is effectively ensured. This allows for acquisition of images of all surfaces of the battery at once, enabling direct detection of overall battery appearance defects based on the images of each surface, thus improving the efficiency of overall battery appearance defect identification.

Herein, the object being photographed is a square battery with six surfaces. A corresponding dwell time will be remained when photographing front images, rear images, bottom images, and top images, and the images of the corresponding surfaces will be photographed at fixed first position, second position, and third position, thus ensuring that each of the six surfaces of the square battery has an independent image. Furthermore, the images photographed from the same surface of each battery exhibit consistency. Based on this, combined with image fusion technology, the four vertices of each surface are used as reference points to align the images. Corresponding pixels in the same position in the images to be fused are fused, so that the defect detection of the plurality of batteries can be completed at once. By sacrificing the size of the detection device, the image fusion is made simpler and more convenient, and excessive complexity that would consume significant computational resources during implementation of the image fusion is avoided, so that the efficiency of the defect detection of square batteries can be ultimately improved.

Furthermore, it is understood that the square battery appearance defect detection method, apparatus, storage medium, and electronic device of the present invention are reproducible and can be used in various industrial applications. For example, the square battery appearance defect detection method, apparatus, storage medium, and electronic device of the present invention can be used in the technical field of computers.

## Claims

1. A method for detecting appearance defects in a square battery, **characterized in that** the method comprises steps of:
moving a battery to be detected to a first position, calling a first camera module to photograph a first part of the battery to be detected, and forming a front image and a rear image of the battery to be detected;
moving the battery to be detected to a second position, calling a second camera module to photograph a second part of the battery to be detected, and forming a left side image and a right side image of the battery to be detected;
moving the battery to be detected to a third position, calling a third camera module to photograph a third part of the battery to be detected, and forming a bottom image and a top image of the battery to be detected; and
identifying appearance defects of the battery to be detected based on the front image, the rear image, the left side image, the right side image, the bottom image, and the top image.

2. The method according to claim 1, wherein the first camera module comprises a first line-scan camera module and a first 3D camera module, the front image comprises a line-scan front image and a 3D front image, the rear image comprises a line-scan rear image and a 3D rear image, and the step of calling a first camera module to photograph a first part of the battery to be detected, and forming a front image and a rear image of the battery to be detected comprises:
moving the first line-scan camera module and the first 3D camera module along a first direction, acquiring information of the front image of the battery to be detected, and forming the line-scan front image and the 3D front image; and
rotating the battery to be detected at a first position by a preset angle, moving the first line-scan camera module and the first 3D camera module along a second direction, acquiring information of the rear image of the battery to be detected, and forming the line-scan rear image and the 3D rear image.

3. The method according to claim 2, wherein both the first line-scan camera module and the first 3D camera module are provided with sensing devices, and a number of the sensing devices on the first line-scan camera module and the first 3D camera module is one or two, respectively.

4. The method according to any one of claims 1 to 3, wherein the second camera module comprises a second camera module A and a second camera module B, and the step of moving the battery to be detected to a second position, calling a second camera module to photograph a second part of the battery to be detected, and forming a left side image and a right side image of the battery to be detected comprises:
the battery to be detected passing by the second camera module during its movement to the second position; scanning the second part by the second camera module A during a passage of the battery to be detected, forming the left side image; scanning the second part by the second camera module B during the passage of the battery to be detected, and forming the right side image.

5. The method according to the method of claim 4, wherein the second camera module A comprises a second line-scan camera module A and a second 3D camera module A, the second camera module B comprises a second line-scan camera module B and a second 3D camera module B, and each of the second line-scan camera module A, the second 3D camera module A, the second line-scan camera module B, and the second 3D camera module B is provided with one or more sensing devices, and a number of the sensing devices on the second line-scan camera module A, the second 3D camera module A, the second line-scan camera module B, and the second 3D camera module B is one or two, respectively.

6. The method according to any one of claims 1 to 5, wherein the method further comprises: moving the battery to be detected to a fourth position, calling a fourth camera module to photograph a fourth part of the battery to be detected, and forming a pole image and an explosion-proof valve image of the battery to be detected; and
the step of identifying appearance defects of the battery to be detected based on the front image, the rear image, the left side image, the right side image, the bottom image, and the top image comprises: identifying the appearance defects of the battery to be detected based on the front image, the rear image, the left side image, the right side image, the bottom image, the top image, the pole image, and the explosion-proof valve image.

7. The method according to any one of claims 1 to 6, wherein the step of identifying appearance defects of the battery to be detected based on the front image, the rear image, the left side image, the right side image, the bottom image, and the top image comprises steps of:
synthesizing the front image and the rear image to form a first synthetic image;
synthesizing the left side image and the right side image to form a second synthetic image; and
identifying appearance defects of the battery to be detected based on the first synthetic image, the second synthetic image, the bottom image, and the top image.

8. The method according to claim 7, wherein the step of synthesizing the front image and the rear image or the step of synthesizing the left side image and the right side image comprises:
extracting the front image and the rear image to be synthesized, or the left side image and the right side image to be synthesized;
extracting shape features from the front image and the rear image, and the left side image and the right side image; and
horizontally stitching, vertically stitching, or directly fusing, based on extracted shape features, the front image and the rear image, or the left side image and the right side image, that have similar shape features.

9. The method according to claim 7, wherein the step of synthesizing the front image and the rear image or the step of synthesizing the left side image and the right side image comprises:
determining the front image and the rear image to be synthesized, and the left side image and the right side image to be synthesized, based on shape features;
establishing a coordinate system and extracting pixel position coordinates of the front image and the rear image to be synthesized, or the left side image and the right side image to be synthesized;
calculating an average pixel value of the front image and the rear image, or the left side image and the right side image, at a same pixel position coordinate; and
using the average pixel value as a pixel value of a synthesized image.

10. The method according to claim 2 or 3, wherein the line-scan front image is a time-division line-scan front image, and after the step of acquiring information of the front image of the battery to be detected, and forming the line-scan front image and the 3D front image, comprises:
decomposing the line-scan front image according to the time-division line-scan image and corresponding scanning rules to form a plurality of line-scan front images.

11. The method according to any one of claims 1 to 10, wherein the step of identifying appearance defects of the battery to be detected based on the front image, the rear image, the left side image, the right side image, the bottom image, and the top image comprises:
acquiring images of same parts of a plurality of batteries to be detected, fusing the images of the same parts, and identifying appearance defects of the batteries to be detected based on fused images, wherein the images of the same parts comprise one or more of the front image, the rear image, the left side image, the right side image, the bottom image, and the top image;
in response to that an identification result of one of the fused images indicates a presence of an appearance defect, individually detecting appearance defects in unfused images corresponding to the fused image with the appearance defect, and determining, based on an appearance defect identification result of each image, whether a corresponding battery has the appearance defect.

12. The method according to claim 11, wherein the step of acquiring images of same parts of a plurality of batteries to be detected, fusing the images of the same parts comprises: identifying one or more reference points from each image to be fused; aligning the images to be fused according to the one or more reference points so that the images to be fused have a same position and orientation; fusing pixels corresponding to the reference points representing the same or corresponding positions in the images to be fused; and fusing other pixels in the images to be fused based on determined reference points.

13. The method according to claim 12, wherein a number of acquired images of the same part of the plurality of batteries to be detected is determined according to a yield rate of the batteries.

14. An apparatus for detecting appearance defects in a square battery, **characterized in that** the apparatus comprises:
a first photographing module, configured to move a battery to be detected to a first position, call a first camera module to photograph a first part of the battery to be detected, and form a front image and a rear image of the battery to be detected;
a second photographing module, configured to move the battery to be detected to a second position, call a second camera module to photograph a second part of the battery to be detected, and form a left side image and a right side image of the battery to be detected;
a third photographing module, configured to move the battery to be detected to a third position, call a third camera module to photograph a third part of the battery to be detected, and form a bottom image and a top image of the battery to be detected; and
a defect identification module, configured to identify appearance defects of the battery to be detected based on the front image, the rear image, the left side image, the right side image, the bottom image, and the top image.

15. The apparatus for detecting appearance defects in a square battery according to claim 14, wherein the first camera module is slidably connected to a first conveying device via a sliding device, and the third camera module is slidably connected to a second conveying device via a sliding device.

16. The apparatus for detecting appearance defects in a square battery according to claim 14 or 15, wherein the apparatus further comprises: a fourth photographing module, configured to move the battery to be detected to a fourth position, call a fourth camera module to photograph a fourth part of the battery to be detected, and form a pole image and an explosion-proof valve image of the battery to be detected.

17. The apparatus for detecting appearance defects in a square battery according to claim 16, wherein the first camera module comprises a first line-scan camera module and a first 3D camera module, wherein the first line-scan camera module comprises a first line-scan camera, a line coaxial device, and a line light device;
the second camera module comprises a second camera module A and a second camera module B, wherein the second camera module A comprises a second line-scan camera module A and a second 3D camera module A, the second camera module B comprises a second line-scan camera module B and a second 3D camera module B, the second line-scan camera module A comprises a second line-scan camera A and a line light device A, and the second line-scan camera module B comprises a second line-scan camera B and a line light device B;
the third camera module comprises a third line-scan camera module and a third 3D camera module, wherein the third line-scan camera module comprises a third line-scan camera, a line coaxial device, and a line light device; and
the fourth camera module comprises an area scan camera A and an area scan camera B, wherein a line coaxial light device and a bar light device are arranged in sequence below the area scan camera A, and a bar light device is arranged below the area scan camera B.

18. The apparatus for detecting appearance defects in a square battery according to claim 17, wherein the defect identification module is configured to perform a first-type battery appearance defect identification on 3D images photographed by the first 3D camera module, the second 3D camera module A, the second 3D camera module B, and the third 3D camera module, and to perform a second-type battery appearance defect identification on line-scan images photographed by the first line-scan camera module, the second line-scan camera module A, the second line-scan camera module B, and the third line-scan camera module;
wherein the first-type battery appearance defect comprises one or more of dents, bulges, appearance damage, scratches, and depth of an overlap width of a battery protective layer; the second-type battery appearance defect comprises one or more of bubbles in the battery protective layer, dents, bulges, wrinkles, appearance damage, scratches, overlap width of the battery protective layer, height of the battery protective layer, surface foreign matter, surface lifting, and surface fingerprints.

19. A computer-readable storage medium, **characterized in that** the computer-readable storage medium stores executable instructions thereon, and the executable instructions, when executed by a processor, cause the processor to perform the method according to any one of claims 1 to 13.

20. An electronic device, **characterized in that** the electronic device comprises:
one or more processors; and
a memory, configured to store one or more programs, wherein the one or more programs, when executed by the one or more processors, cause the one or more processors to perform the method according to any one of claims 1 to 13.
